Europäisches Patentamt

European Patent Office

Office européen des brevets

(19)

(11) Publication number: **0 248 607**
**B1**

(12) # EUROPEAN PATENT SPECIFICATION

(45) Date of publication of the patent specification:
04.04.90

(51) Int. Cl.⁴: **C01B 3/56**

(21) Application number: **87304784.9**

(22) Date of filing: **29.05.87**

(54) **Composition for reversably absorbing and desorbing hydrogen.**

(30) Priority: **31.05.86 JP 126810/86**

(43) Date of publication of application:
**09.12.87 Bulletin 87/50**

(45) Publication of the grant of the patent:
**04.04.90 Bulletin 90/14**

(84) Designated Contracting States:
**CH DE FR GB IT LI NL**

(56) References cited:
**US-A- 4 360 445**

(73) Proprietor: **SUZUKI SHOKAN CO. LTD.,**
**No. 1 Koujimachi 3-chome Chiyoda-ku, Tokyo 102(JP)**

(72) Inventor: **Suzuki, Jo, Suzuki Shokan Co. Ltd.**
**No. 1 Koujimachi 3-chome, Chiyoda-ku Tokyo 102(JP)**
Inventor: **Hirosawa, Kimihiko, Suzuki Shokan Co. Ltd.**
**No. 1 Koujimachi 3-chome, Chiyoda-ku Tokyo 102(JP)**
Inventor: **Yamaguchi, Tamotu, Suzuki Shokan Co. Ltd.**
**No. 1 Koujimachi 3-chome, Chiyoda-ku Tokyo 102(JP)**
Inventor: **Saito, Takuya, Suzuki Shokan Co. Ltd.**
**No. 1 Koujimachi 3-chome, Chiyoda-ku Tokyo 102(JP)**
Inventor: **Terazawa, Shotaro, Suzuki Shokan Co. Ltd.**
**No. 1 Koujimachi 3-chome, Chiyoda-ku Tokyo 102(JP)**

(74) Representative: **Crisp, David Norman et al, D. YOUNG &**
**CO. 10 Staple Inn, London, WC1V 7RD(GB)**

## Description

This invention relates to a composition for reversibly absorbing (or adsorbing) and desorbing hydrogen and isotopes thereof. In particular, the invention relates to a substance for reversibly absorbing-desorbing hydrogen and isotopes thereof which is easy to hydrogenate and has a high hydrogen absorbing and desorbing rate. This composition may also be used as a 'getter' for other gases.

Hydrogen getting substances, such as Ti, Zr, Hf and the like, showing a hydrogen dissociation pressure lower than atmospheric pressure at temperatures less than 300°C have been known. However, these metals are generally covered with strong oxide and/or nitride films, so that to obtain a hydrogengettable clean active surface, pretreatment is required, for example, by sublimation in a sputtering method, or heat-treatment at a high temperature e.g. 700 - 1,000°C.

It has been proposed to improve pretreatment by activation with one or more additional elements to form an alloy, and so control the hydrogen dissociation pressure characteristic, or increase the reversible hydrogen absorbing-desorbing rate.

However, Zr-Al and Zr-Ni alloys, for example, require heat-treatment or activation at a high temperature such as at 450 - 750°C. On the other hand, a Zr-V alloy can reversibly absorb and desorb hydrogen without an initial activation treatment, but if such an alloy (e.g. Zr $V_{0.15}$) is exposed to hydrogen gas at a pressure of about 0.5 kg/cm² , a high temperature for initially absorbing hydrogen of about 230°C is required and the absorption rate is slow. Further, the physical properties of Zr-V alloys are such that it is difficult to prepare these alloys with a desired size, e.g. by cutting or crushing.

Intermetallic compounds, Zr-V-O and the like, stabilized by oxygen, have also been proposed, but these require an activation treatment and the control of sample grain size is difficult because of the hardness of the alloys. It has also been proposed to control hydrogen dissociation pressure, sample grain size and characteristics to gases other than hydrogen, by adding 4th and 5th elements to an alloy stabilized with oxygen and forming an intermetallic compound such as Zr-Ti-V-Fe-O. However, by increasing the kinds of additional elements, it has been difficult to regulate the composition of the substance.

We have now found it possible to provide reversibly hydrogen absorbing-desorbing materials showing a hydrogen equilibrium pressure lower than atmospheric pressure with a comparatively high hydrogenation composition at a temperature of less than 300°C, the materials having a low temperature for initially absorbing hydrogen and a sufficiently fast rate of absorbing and desorbing hydrogen. In addition, the materials do not generally require any initial activation treatment. These properties are achieved by dispersing specified amounts of one or more particular rare earth oxides into Zr(FeV) having a specified composition to form a complex.

Fe-V is substantially cheaper than V, and surprisingly the properties of the complex are generally equivalent to those of a complex obtained by dispersing a rare earth oxide into Zr-V.

Therefore, we have found it possible to provide a low cost reversible hydrogen absorbing-desorbing substance.

According to the invention, there is provided a composition for reversibly absorbing (or adsorbing) and desorbing hydrogen comprising 0.8 - 20% by weight of one or more oxides of one or more elements selected from La, Ce, Nd, Pr, Sm and Eu, in Zr(FeV)$_x$ (wherein x is in the range $0.01 \leq x \leq 0.88$).

In the compositions of the invention, the zirconium-iron-vanadium which forms a matrix should have a composition of Zr(FeV)$_{0.01-0.88}$.

As the amount of FeV in the composition of the invention is increased, the hydrogen gas activity increases and the temperature characteristic, hydrogen equilibrium pressure, and composition characteristics vary. When the FeV content is lower than the above range, the effect of increasing the hydrogen gas activity is not so conspicuous, so that the desired properties are not attained, and an FeV content exceeding the above range is not preferable because the hydrogen activity does not increase.

The oxides of the elements which may be dispersed in the Zr(FeV)$_x$ matrix are one or more oxides selected from La, Ce, Nd, Pr, Sm and Eu oxides, and the amount thereof is 0.8 - 20% by weight. The hydrogen gas activity increases as the amount of added rare earth oxide increases, while the temperature-hydrogen equilibrium pressure characteristic is scarcely affected. However, when the amount added does not fall within the above range, the effect of increasing activity is not noticable, and when the amount exceeds the above range, there is no more effect on the activity and the hydrogen absorption amount is only reduced, so that neither cases are preferable.

For consistent properties, it is preferable that the elements of the oxides are in their most stable oxidation states, that is, La$_2$O$_3$, CeO$_2$, Ce$_2$O$_3$, Nd$_2$O$_3$, Pr$_6$O$_{11}$, Sm$_2$O$_3$ and Eu$_2$O$_3$ ,but oxides with other oxidation states may be used. Thus, oxides with lower, mixed or non-stoichiometric oxidation states may also be used.

Various methods may be employed to manufacture the compositions of the invention. The most preferable method is to prepare highly pure zirconium and highly pure iron-vanadium and a mixture of the one or more rare earth oxides mentioned above (inclusive of Misch metal oxide) to form respective predetermined compositions and to combine them in an inert atmosphere such as argon and the like.

Alternatively, the rare earth oxides are not directly mixed, but rare earth pure metals are mixed and melted in an oxidizing atmosphere, or a small amount of oxide such as of Fe-V or Zr is mixed and melted.

The compositions according to the invention may also readily act as a getter for impure gases such as oxygen, nitrogen, carbon monoxide, carbon dioxide, methane, steam and the like other than hydrogen gas. In addition, the compositions according to the invention may be easily ground as compared with a Zr(FeV) matrix, and are generally not too brittle, and have high density.

The compositions according to the invention generally do not require any activation treatment whatever the initial hydrogen content, and their initial hydrogenation rates are large while the reversible absorbing-desorbing rate is advantageously large.

Furthermore, the compositions of the invention has various advantages in that they may be readily ground; the temperature condition and the like in initial hydrogenation is optimised almost without changing the temperature-pressure-composition characteristic of the mother alloy in comparison with alloy improvement by the conventional 3rd element addition; the reaction rate is increased; and they may be used as getters for other gases.

With these advantages, the reversible hydrogen absorbing-desorbing compositions of this invention may be advantageously used for refining and separating hydrogen gas; for hydrogen gas pressure control of vacuum machines and the like; as a hydrogen gas getter, including isotope and non-volatile getter; as well as in devices utilizing the high absorbing-desorbing rate at near atmospheric pressure.

The invention is further illustrated by way of non-limiting example with reference to the accompanying drawings, in which:-

Figures 1 and 2 are charcteristic diagrams showing the initial activity of the composition for reversibly absorbing and desorbing hydrogen according to the invention; and

Figure 3 is a diagram showing equilibrium hydrogen pressure to temperature characteristics of the composition of the invention in case of changing the hydrogenation composition.

The invention will be illustrated by referring to examples hereinafter. These examples describe preferred specified compositions and other conditions, but these examples are for illustration only and the invention is not limited by these examples.

Examples 1 - 31

In order to form the compositions identified by Table 1 below, the following were used: Zr metal powder (purity : more than 99.7%); Fe-V metal pieces (purity : more than 99.7%); $CeO_2$ (purity : more than 99.0%; $Nd_2O_3$ (purity : more than 99.0%; $Pr_6O_{11}$ (purity : more than 99.0%); $Sm_2O_3$ (purity : more than 99.0%); $Eu_2O_3$ (purity : more than 99.0%); and a mixed rare earth oxide (consisting of 30 wt% of $La_2O_3$, 50 wt% $CeO_2$, 15 wt% of $Nd_2O_3$, 4 wt% of $Pr_6O_{11}$ and 1 wt% of $Sm_2O_3$). The appropriate amounts of the components were arc melted in an argon atmosphere and formed into a reversible hydrogen absorbing-desorbing material.

The thus obtained materials were ground to 20 - 40 mesh, and 4 g of each charged to a hydrogen absorbing-desorbing reactor, vacuum exhausted to $10^{-2}$ Torr. Hydrogen of 99.9999% purity was introduced into the reactor at a pressure of about 58.9 kPa (0.6 kg/cm$^2$), the material temperature was maintained at 30°C for 10 minutes, and then the temperature raised from 30°C to 300°C at a rate of 5°C/min. By measuring the sample temperature and the pressure in the reactor, the temperature that the sample started to absorb hydrogen and the initial hydrogen absorbing rate were determined. Thus, the indices of the hydrogen absorption starting temperature and the absorbing rate at the time of the initial hydrogen absorption are as shown in Table 1. Further, the saturated hydrogen absorbing amount at the temperature of starting absorption of initial hydrogen in each sample (converted into STP) is as shown in Table 1.

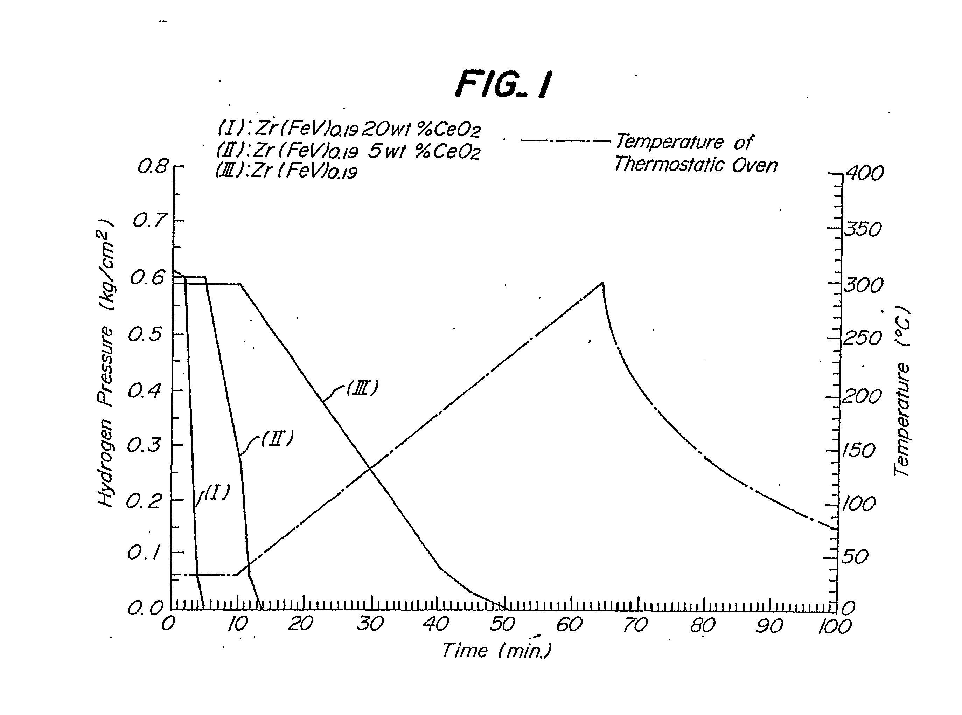

Figure 1 is a graph showing the change with time of hydrogen pressure in a reactor when the materials of Example No. 22 (solid line (I), Example No. 14 (solid line (II)) and Zr(FeV) $_{0.19}$ (solid line (III)) as mother alloy thereof and ground to 20 - 40 mesh are charged in the above reactor. After vacuum exhaustion to $1.31 \times 10^{-2}$ Pa ($10^{-4}$Torr) in the reactor, a hydrogen pressure of 58.9 kPa (0.6 kg/cm$^2$) is provided, 30°C is maintained for 10 minutes, and the temperature is raised to 300°C at a rate of 5°C/min.

In Figure 1, the abscissa indicates time, the ordinate indicates the pressure in a reactor at that time by a solid line and the temperature in the vicinity of the sample at that time by a broken line.

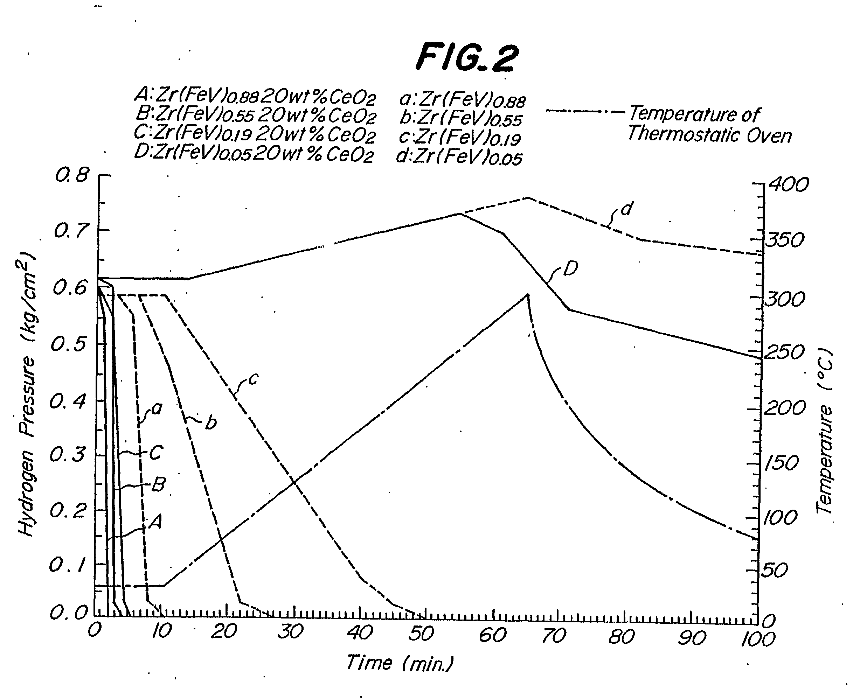

Figure 2 is a graph showing the change with time of hydrogen pressure when testing materials of Example No. 30 (solid line A), Example No. 27 (solid line B), Example No. 22 (solid line C), Example No. 5 (solid line D) and respective mother alloys Zr(FeV)$_{0.88}$ (broken line a) and Zr(FeV)$_{0.55}$ (broken line b), Zr(FeV)$_{0.19}$ (broken line c) and Zr(FeV)$_{0.05}$ (broken line d) under the same condition as in the case shown in Figure 1.

In Figure 2, the abscissa indicates time, the ordinate indicates the pressure in a reactor at that time by a solid-broken line, and the sample temperature by one-dot line.

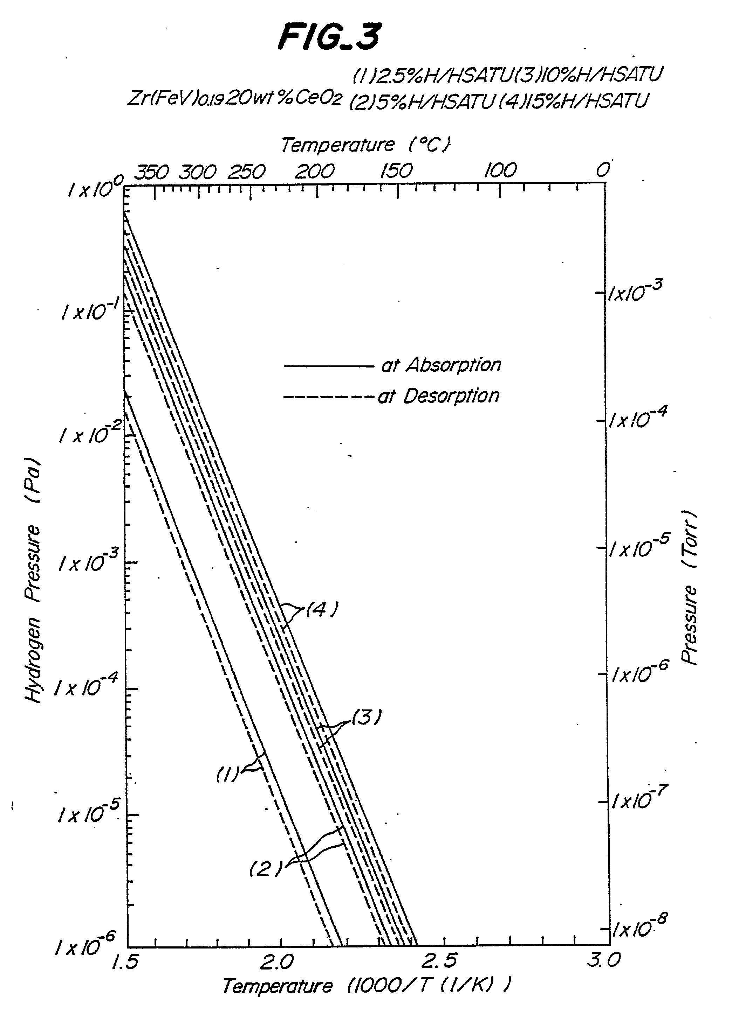

Figure 3 is a graph showing the hydrogen pressure temperature characteristic of a sample measured by grinding the material of Example No. 22 to 20 - 40 mesh, weighing 4 g into a vacuum measuring hydrogen absorbing-desorbing container, continuously heating and vacuum exhausting the whole container at ducing a predetermined amount of hydrogen gas at room temperature for absorption by the sample, raising the temperature from room temperature to about 350°C by balancing the hydrogen pressure, and returning to room temperature in the same manner.

In Figure 3, the abscissa indicates the hydrogen pressure in the container charged with the sample, that is, it shows the equilibrium hydrogen pressure of said sample at that temperature, and the ordinate indicates the sample temperature at that time (shown by 1000/T (1/k)) and (°C)).

In Figure 3, the solid line shows the time of absorbing hydrogen and the broken line shows the time of desorbing hydrogen, wherein (1) shows that the hydrogen content in the hydrogenated product is 2.5% of the saturated hydrogen absorbing amount, (2) shows 5%, (3) shows 10%, and (4) shows 15%, respectively. In each example, hydrogen is extremely quickly absorbed and desorbed to reach equilibrium, and shows the hydrogen pressure-temperature characteristic as shown in Figure 3.

Further, in this pressure measurement, the pressure range from $10^{-5}$ to $10^{-2}$ Pa is the partial pressure measurement of hydrogen gas, and the pressure range higher than $10^{-2}$ Pa is the total pressure measurement with the use of an ionizer vacuum meter.

Absorption of $Co-N_2$

The material of Example No. 22 was ground to 20 - 40 mesh, 4 g placed in a stainless vacuum measurement hydrogen absorbing-desorbing containing (A), while a control container (B) was free of the material. Both (A) and (B) were continuously heated and vacuumed at 150°C for 24 hours with a cryopump and back to room temperature, sealed from the exhaust system, and the change with time of respective CO-$N_2$ partial pressures within said containers (A) and (B) determined. At a room temperature of 20°C, the container (A) shows an increase of CO-$N_2$ component at a rate of $2.88 \times 10^{-12}$ Pa.l./sec ($2.19 \times 10^{-14}$ Torr $\ell$/sec), and the container (B) shows an increase of CO-$N_2$ at a rate of $4.61 \times 10^{-8}$ Pa.l./sec ($3.51 \times 10^{-10}$ Torr $\ell$/sec). Therefore, even at a room temperature of 20°C, said sample absorbs CO-$N_2$ at an absorbing rate of ($3.51 \times 10^{-10}$ Torr $\ell$/sec). The temperatures of both the containers (A) and (B) was raised from 25°C to 250°C at a rate of 15°C/min., and the change with time of CO-$N_2$ partial pressure was examined in the same manner as described above. The container (A) has $1.50 \times 10^{-5}$ Pa at room temperature and a partial pressure of $6.50 \times 10^{-6}$ Pa at 250°C, and the container (B) has $2.30 \times 10^{-4}$ Pa at room temperature and $2.30 \times 10^{-3}$ Pa at 250°C. Therefore, it means that said sample absorbs CO-$N_2$ at $2.30 \times 10^{-7}$ ($1.75 \times 10^{-9}$ Torr $\ell$/sec) during this period. Further, the temperature when the CO-$N_2$ partial pressure was reduced in the container (A) was about 40°C.

Absorption of $CO_2$

The material of Example No. 22 was ground to 20 - 40 mesh, 4 g placed in a stainless vacuum measurement hydrogen absorbing-desorbing container (A), while a control container (B) was free of the material. Both (A) and (B) were continuously heated and vacuumed at 150°C for 24 hours with a cryopump and back to room temperature, sealed from the exhaust system, and the change with time of respective $CO_2$ partial pressures within containers (A) and (B) was determined. At a room temperature of 20°C, container (A) shows an increase of $CO_2$ component at a rate of $3.8 \times 10^{-13}$ Pa.l/sec ($2.89 \times 10^{-15}$ Torr $\ell$/sec), and container (B) shows an increase of $CO_2$ at a rate $3.08 \times 10^{-10}$ Pa.l/sec ($2.34 \times 10^{-12}$ Torr $\ell$/sec). Therefore, even at a room temperature of 20°C, the sample absorbs $CO_2$ at an absorbing rate of $3.08 \times 10^{-10}$ Pa.l/sec ($2.34 \times 10^{-12}$ Torr $\ell$/sec). The temperatures of both containers (A) and (B) was raised from 25°C to 250°C at a rate of 15°C/min, and the change with time of $CO_2$ partial pressure was examined in the same manner as described above. The container (A) has $8.10 \times 10^{-7}$ Pa at room temperature and a partial pressure of $1.60 \times 10^{-6}$ Pa at 250°C, and container (B) has $1.00 \times 10^{-6}$ Pa at a room temperature and $2.40 \times 10^{-5}$ Pa at 250°C. Therefore, it means that said sample absorbs $CO_2$ at $2.41 \times 10^{-9}$ Pa.l/sec ($1.83 \times 10^{-11}$ Torr $\ell$/sec) during this period.

$Zr(FeV)_{0.19}Nd_2O_3$ 10 wt% and $Zr(FeV)_{0.19}Pr_6O_{11}$ 10 wt% are not shown in Table 1 as examples, but are expected to give the same effect as the examples shown in Table 1.

The following materials may also be expected to give the same effect as the examples shown in Table 1.

$Zr(FeV)_{0.19}La_2O_3$ p wt%, $CeO_2$ q wt%

$Zr(FeV)_{0.19}La_2O_3$ p wt%, $Nd_2O_3$ q wt%

$Zr(FeV)_{0.19}La_2O_3$ p wt%, $Pr_6O_{11}$ q wt%

$Zr(FeV)_{0.19}CeO_2$ p wt%, $Sm_2O_3$ q wt%

$Zr(FeV)_{0.19}CeO_2$ p wt%, $Eu_2O_3$ q wt%

$Zr(FeV)_{0.19}Nd_2O_3$ p wt%, $Pr_6O_{11}$ q wt%

$Zr(FeV)_{0.19}Sm_2O_3$ p wt%, $Eu_2O_3$ q wt%

(In the above materials, $0,8 \leq p + q \leq 20$)

$Zr(FeV)_{0.19}La_2O_3$ p wt%, $CeO_2$ q wt%

$Sm_2O_3$ r wt%

(In this material, $0.8 \leq p + q + r \leq 20$)

$Zr(FeV)_{0.19}La_2O_3$ p wt%, $CeO_2$ q wt%

$Sm_2O_3$ r wt%, $Eu_2O_3$ s wt%

(In this material, $0.8 \leq p + q + r + s \leq 20$)

(In this material, $0.8 \leqq p + q + r + s \leqq 20$)
$Zr(FeV)_{0.19}La_2O_3$ p wt%, $CeO_2$ q wt%
$Nd_2O_3$ r wt%, $Sm_2O_3$ s wt%
$Eu_2O_3$ t wt%
(In this material, $0.8 \leqq p + q + r + s + t \leqq 20$)

Furthermore, the following compositions show similar excellent properties as those indicated above. These compositions comprise a complex containing 0.8 - 10 % by weight of an oxide of more than one element selected from La, Ce, Nd, Pr, Sm and Eu in a material of formula $(Zr_{1-x}L_x)(FeV)_y$, $(Zr(FeV)_{1-z}M_z)_y$ or $(Zr_{1-x}L_x)(FeV)_{1-z}M_z)_y$. (In the materials, L is one or two elements selected from Ti and Hf, M is one or more elements selected from Cr, Mn, Fe, Co, Ni, Cu and A1 and further

$0.05 \leqq x \leqq 0.95$
$0.01 \leqq y \leqq 0.88$
$0.05 \leqq z \leqq 0.5$)

Table 1

| Example number | Material (substance composition) | Hydrogen absorbing amount $(cm^3/g)$ | Temperature (°C) | Indices of absorbing rate at the time of absorption |
|---|---|---|---|---|
| 1 | $Zr(FeV)_{0.05}La_2O_3$ 1% by weight | 213 | 250 | less than $0.5\ kg/cm^2$ within 180 min. |
| 2 | $Zr(FeV)_{0.05}CeO_2$ 1% by weight | 210 | 250 | less than $0.5\ kg/cm^2$ within 180 min. |
| 3 | $Zr(FeV)_{0.05}$ mixed rare earth oxide 1% by weight | 215 | 250 | less than $0.5\ kg/cm^2$ within 180 min. |
| 4 | $Zr(FeV)_{0.05}La_2O_3$ 20% by weight | 198 | 240 | less than $0.4\ kg/cm^2$ within 180 min. |
| 5 | $Zr(FeV)_{0.05}CeO_2$ 20% by weight | 198 | 240 | less than $0.4\ kg/cm^2$ within 180 min. |
| 6 | $Zr(FeV)_{0.05}$ mixed rare earth oxide 20% by weight | 194 | 240 | less than $0.4\ kg/cm^2$ within 180 min. |
| 7 | $Zr(FeV)_{0.1}La_2O_3$ 20% by weight | 182 | 220 | less than $0.4\ kg/cm^2$ within 180 min. |
| 8 | $Zr(FeV)_{0.1}CeO_2$ 20% by weight | 180 | 220 | less than $0.4\ kg/cm^2$ within 180 min. |
| 9 | $Zr(FeV)_{0.1}$ mixed rare earth oxide 20% by weight | 180 | 220 | less than $0.4\ kg/cm^2$ within 180 min. |
| 10 | $Zr(FeV)_{0.19}La_2O_3$ 1% by weight | 170 | 200 | less than $0.01\ kg/cm^2$ within 120 min. |
| 11 | $Zr(FeV)_{0.19}CeO_2$ 1% by weight | 167 | 200 | less than $0.01\ kg/cm^2$ within 120 min. |
| 12 | $Zr(FeV)_{0.19}$ mixed rare earth oxide 1% by weight | 168 | 200 | less than $0.01\ kg/cm^2$ within 120 min. |
| 13 | $Zr(FeV)_{0.19}La_2O_3$ 5% by weight | 160 | 30 | less than $0.01\ kg/cm^2$ within 15 min. |
| 14 | $Zr(FeV)_{0.19}CeO_2$ 5% by weight | 160 | 30 | less than $0.01\ kg/cm^2$ within 15 min. |
| 15 | $Zr(FeV)_{0.19}$ mixed rare earth oxide 5% by weight | 158 | 40 | less than $0.01\ kg/cm^2$ within 15 min. |
| 16 | $Zr(FeV)_{0.19}La_2O_3$ 10% by weight | 156 | room temperature (30) | less than $0.01\ kg/cm^2$ within 10 min. |
| 17 | $Zr(FeV)_{0.19}CeO_2$ 10% by weight | 154 | room temperature (30) | less than $0.01\ kg/cm^2$ within 10 min. |
| 18 | $Zr(FeV)_{0.19}Sm_2O_3$ 10% by weight | 154 | room temperature (30) | less than $0.01\ kg/cm^2$ within 10 min. |
| 19 | $Zr(FeV)_{0.19}Eu_2O_3$ 10% by weight | 153 | room temperature (30) | less than $0.01\ kg/cm^2$ within 10 min. |
| 20 | $Zr(FeV)_{0.19}$ mixed rare earth oxide 10% by weight | 151 | room temperature (30) | less than $0.01\ kg/cm^2$ within 10 min. |
| 21 | $Zr(FeV)_{0.19}La_2O_3$ 20% by weight | 145 | room temperature (30) | less than $0.01\ kg/cm^2$ within 10 min. |
| 22 | $Zr(FeV)_{0.19}CeO_2$ 20% by weight | 142 | room temperature (30) | less than $0.01\ kg/cm^2$ within 5 min. |
| 23 | $Zr(FeV)_{0.19}Sm_2O_3$ 20% by weight | 142 | room temperature (30) | less than $0.01\ kg/cm^2$ within 5 min. |
| 24 | $Zr(FeV)_{0.19}Eu_2O_3$ 20% by weight | 143 | room temperature (30) | less than $0.01\ kg/cm^2$ within 5 min. |
| 25 | $Zr(FeV)_{0.19}$ mixed rare earth oxide 20% by weight | 140 | room temperature (30) | less than $0.01\ kg/cm^2$ within 5 min. |

EP 0 248 607 B1

Table 1 (continued)

| Example number | Material (substance composition) | Hydrogen absorbing amount ($cm^3/g$) | Temperature (°C) | Indices of absorbing rate at the time of absorption |
|---|---|---|---|---|
| 26 | $Zr(FeV)_{0.55}La_2O_3$ 20% by weight | 125 | room temperature (30) | less than 0.01 $kg/cm^2$ within 4 min. |
| 27 | $Zr(FeV)_{0.55}CeO_2$ 20% by weight | 123 | room temperature (30) | less than 0.01 $kg/cm^2$ within 4 min. |
| 28 | $Zr(FeV)_{0.55}$ mixed rare earth oxide 20% by weight | 122 | room temperature (30) | less than 0.01 $kg/cm^2$ within 4 min. |
| 29 | $Zr(FeV)_{0.88}La_2O_3$ 20% by weight | 110 | room temperature (30) | less than 0.01 $kg/cm^2$ within 4 min. |
| 30 | $Zr(FeV)_{0.88}CeO_2$ 20% by weight | 107 | room temperature (30) | less than 0.01 $kg/cm^2$ within 2 min. |
| 31 | $Zr(FeV)_{0.88}$ mixed rare earth oxide 20% by weight | 105 | room temperature (30) | less than 0.01 $kg/cm^2$ within 2 min. |

**Claims**

1. A composition for reversibly absorbing and desorbing hydrogen, comprising 0.8 - 20% by weight of one or more oxides of one or more elements selected from La, Ce, Nd, Pr, Sm and Eu, dispersed in $Zr(FeV)_x$ (wherein x is in the range $0.01 \leq x \leq 0.88$).

2. A composition as claimed in claim 1, wherein the oxide component comprises one or more of $La_2O_3$, $CeO_2$, $Ce_2O_3$, $Nd_2O_3$, $Pr_6O_{11}$, $Sm_2O_3$ and $Eu_2O_3$.

3. A composition as claimed in either of claims 1 and 2, wherein the oxide component comprises $La_2O_3$ (p% by weight) and any one of $CeO_2$, $Nd_2O_3$ and $Pr_6O_{11}$ (q% by weight) where $0.8 \leq (p + q) \leq 20$.

4. A composition as claimed in either of claims 1 and 2, wherein the oxide component comprises $CeO_2$ (p% by weight) and any one of $Sm_2O_3$ and $Eu_2O_3$ (q% by weight) where $0.8 \leq (p + q) \leq 20$.

5. A composition as claimed in either of claims 1 and 2, wherein the oxide component comprises $Nd_2O_3$ (p% by weight) and $Pr_6O_{11}$ (q% by weight) where $0.8 \leq (p + q) \leq 20$.

6. A composition as claimed in either of claims 1 and 2, wherein the oxide component comprises $Sm_2O_3$ (p% by weight) and $Eu_2O_3$ (q% by weight) where $0.8 \leq (p + q) \leq 20$.

7. A composition as claimed in either of claims 1 and 2, wherein the oxide component comprises $La_2O_3$(p% by weight), $CeO_2$ (q% by weight) and $Sm_2O_3$(r% by weight), where $0.8 \leq (p + q + r) \leq 20$.

8. A composition as claimed in either of claims 1 and 2, wherein the oxide component comprises $La_2O_3$ (p% by weight), $CeO_2$ (q% by weight), $Sm_2O_3$ (r% by weight) and $Eu_2O_3$ (s% by weight), where $0.8 \leq (p + q + r + s) \leq 20$.

9. A composition as claimed in either of claims 1 and 2, wherein the oxide component comprises $La_2O_3$ (p% by weight), $CeO_2$ (q% by weight), $Nd_2O_3$ (r% by weight), $Sm_2O_3$ (s% by weight) and $Eu_2O_3$ (t% by weight), where $0.8 \leq (p + q + r + s + t) \leq 20$.

10. A method of reducing the hydrogen content of a hydrogen-containing atmosphere which comprises contacting said atmosphere with a composition according to any one of the preceding claims.

11. A method of purifying an impure gas which comprises contacting said gas with a composition according to any one of claims 1 to 9.

**Revendications**

1. Composition pour absorber et désorber réversiblement l'hydrogène, comprenant 0,8 à 20% en poids d'un ou plusieurs oxydes d'un ou plusieurs éléments choisis parmi La, Ce, Nd, Pr, Sm et Eu, dispersés dans $Zr(FeV)_x$ (où x est dans la gamme de $0,01 \leq x \leq 0,88$).

2. Composition selon la revendication 1, dans laquelle le composant oxyde comprend un ou plusieurs de $La_2O_3$, $CeO_2$, $Ce_2O_3$, $Nd_2O_3$, $Pr_6O_{11}$, $Sm_2O_3$ et $Eu_2O_3$.

3. Composition selon l'une des revendications 1 ou 2, dans laquelle le composant oxyde comprend $La_2O_3$ (p % en poids) et l'un quelconque de $CeO_2$, $Nd_2O_3$ et $Pr_6O_{11}$ (q% en poids) où $0,8 \leq (p + q) \leq 20$.

4. Composition selon l'une des revendications 1 ou 2, où le composant oxyde comprend $CeO_2$ (p% en poids) et l'un quelconque de $Sm_2O_3$ et $Eu_2O_3$ (q% en poids) où $0,8 \leq (p + q) \leq 20$.

7

5. Composition selon l'une des revendications 1 ou 2, dans laquelle le composant oxyde comprend $Nd_2O_3$ (p% en poids et $Pr_6O_{11}$ (q% en poids) où $0,8 \leq (p + q) \leq 20$.

6. Composition selon l'une des revendications 1 ou 2, dans laquelle le composant oxyde comprend $Sm_2O_3$ (p% en poids) et $Eu_2O_3$ (q% en poids) où $0,8 \leq (p + q) \leq 20$.

7. Composition selon l'une des revendications 1 ou 2, dans laquelle le composant oxyde comprend $La_2O_3$ (p% en poids), $CeO_2$ (q% en poids) et $Sm_2O_3$ (r% en poids) où $0,8 \leq (p + q + r) \leq 20$.

8. Composition selon l'une des revendications 1 ou 2, dans laquelle le composant oxyde comprend $La_2O_3$ (p% en poids), $CeO_2$ (q% en poids), $Sm_2O_3$ (r% en poids) et $Eu_2O_3$ (s% en poids) où $0,8 \leq (p + q + r + s) \leq 20$.

9. Composition selon l'une des revendications 1 ou 2, dans laquelle le composant oxyde comprend $La_2O_3$ (p% en poids), $CeO_2$ (q% en poids), $Nd_2O_3$ (r% en poids), $Sm_2O_3$ (s% en poids) et $Eu_2O_3$ (t% en poids) où $0,8 \leq (p + q + r + s + t) \leq 20$.

10. Procédé pour réduire la teneur en hydrogène d'une atmosphère contenant de l'hydrogène qui comprend le contact de ladite atmosphère avec une composition selon l'une quelconque des revendications précédentes.

11. Procédé pour purifier un gaz impur qui comprend le contact dudit gaz avec une composition selon l'une quelconque des revendications 1 à 9.

## Patentansprüche

1. Zusammensetzung zur reversiblen Absorption und Desorption von Wasserstoff mit 0,8 bis 20 Gew.-% eines oder mehrerer Oxide eines oder mehrerer der Elemente La, Ce, Nd, Pr, Sm und Eu in $Zr(FeV)_x$ dispergiert (worin x im Bereich von $0,01 \leq x \leq 0,88$ ist).

2. Zusammensetzung nach Anspruch 1, worin die Oxidkomponente eines oder mehrere von $La_2O_3$, $CeO_2$, $Ce_2O_3$, $Nd_2O_3$, $Pr_6O_{11}$, $Sm_2O_3$ und $Eu_2O_3$ umfaßt.

3. Zusammensetzung nach einem der Ansprüche 1 und 2, worin die Oxidkomponente $La_2O_3$ (p Gew.-%) und eines von $CeO_2$, $Nd_2O_3$ und $Pr_6O_{11}$ (q Gew.-%) umfaßt, worin $0,8 \leq (p + q) \leq 20$ ist.

4. Zusammensetzung nach einem der Ansprüche 1 und 2, worin die Oxidkomponente $CeO_2$ (p Gew.-%) und eines von $Sm_2O_3$ und $Eu_2O_3$ (q Gew.-%) umfaßt, worin $0,8 \leq (p + q) \leq 20$ ist.

5. Zusammensetzung nach einem der Ansprüche 1 und 2, worin die Oxidkomponente $Nd_2O_3$ (p Gew.-%) und $Pr_6O_{11}$ (q Gew.-%) umfaßt, worin $0,8 \leq (p + q) \leq 20$ ist.

6. Zusammensetzung nach einem der Ansprüche 1 und 2, worin die Oxidkomponente $Sm_2O_3$ (p Gew.-%) und $Eu_2O_3$ (q Gew.-%) umfaßt, worin $0,8 \leq (p + q) \leq 20$ ist.

7. Zusammensetzung nach einem der Ansprüche 1 und 2, worin die Oxidkomponente $La_2O_3$ (p Gew.-%), $CeO_2$ (q Gew.-%) und $Sm_2O_3$ (r Gew.-%) umfaßt, worin $0,8 \leq (p + q + r) \leq 20$ ist.

8. Zusammensetzung nach einem der Ansprüche 1 und 2, worin die Oxidkomponente $La_2O_3$ (p Gew.-%), $CeO_2$ (q Gew.-%), $Sm_2O_3$ (r Gew.-%) und $Eu_2O_3$ (s Gew.-%) umfaßt, worin $0,8 \leq (p + q + r + s) \leq 20$ ist.

9. Zusammensetzung nach einem der Ansprüche 1 und 2, worin die Oxidkomponente $La_2O_3$ (p Gew.-%), $CeO_2$ (q Gew.-%), $Nd_{23}$ (r Gew.-%), $Sm_2O_3$ (s Gew.-%) und $Eu_2O_3$ (t Gew.-%) umfaßt, worin $0,8 \leq (p + q + r + s + t) \leq 20$ ist.

10. Verfahren zur Verminderung des Wasserstoffgehaltes einer wasserstoffhaltigen Atmosphäre, bei dem man die Atmosphäre mit einer Zusammensetzung nach einem der vorausgehenden Ansprüche in Berührung bringt.

11. Verfahren zur Reinigung eines unreinen Gases, bei dem man das Gas mit einer Zusammensetzung nach einem der Ansprüche 1 bis 9 behandelt.

# FIG. 1

(I): Zr(FeV)$_{0.19}$ 20wt %CeO$_2$
(II): Zr(FeV)$_{0.19}$ 5wt %CeO$_2$
(III): Zr(FeV)$_{0.19}$

—·—·— Temperature of
Thermostatic Oven

EP 0 248 607 B1

## FIG.2

A:Zr(FeV)$_{0.88}$ 20wt%CeO$_2$    a:Zr(FeV)$_{0.88}$    —·—·— Temperature of
B:Zr(FeV)$_{0.55}$ 20wt%CeO$_2$    b:Zr(FeV)$_{0.55}$              Thermostatic Oven
C:Zr(FeV)$_{0.19}$ 20wt%CeO$_2$    c:Zr(FeV)$_{0.19}$
D:Zr(FeV)$_{0.05}$ 20wt%CeO$_2$    d:Zr(FeV)$_{0.05}$

EP 0 248 607 B1

# FIG.3

(1)2.5%H/HSATU (3)10%H/HSATU

Zr(FeV)<sub>0.19</sub>20wt%CeO<sub>2</sub> (2)5%H/HSATU (4)15%H/HSATU